# EUROPÄISCHE PATENTSCHRIFT

(11) **EP 1 426 220 B1**
(45) Veröffentlichungstag und Bekanntmachung des Hinweises auf die Patenterteilung: **07.11.2007**
(21) Anmeldenummer: 03020647.8
(22) Anmeldetag: 11.09.2003
(51) Int. Cl.: B60J 7/22

(54) **Luftleiteinrichtung**
Air guide device
Dispositif de guidage d'air

(30) Priorität: 05.12.2002 DE 10256753
(43) Veröffentlichungstag der Anmeldung: 09.06.2004
(73) Patentinhaber: Dr.Ing. h.c. F. Porsche Aktiengesellschaft, 70435 Stuttgart (DE)
(72) Erfinder: Pfertner, Kurt, 71254 Ditzingen (DE); Wilke, Gunnar, 49504 Lotte (DE); Czechtizky, Timo, 73061 Ebersbach-Rosswälden (DE)

(56) Entgegenhaltungen:
- EP-A- 0 716 946
- EP-B- 0 374 421
- DE-A- 3 925 808
- DE-A- 19 853 358

## Beschreibung

Die Erfindung bezieht sich auf eine Luftleiteinrichtung an einem Windabweiser eines Kraftfahrzeugs nach dem Oberbegriff des Anspruchs 1.

Aus der EP 0 374 421 B1 ist ein Windabweiser für ein Schiebedach bekannt, an dem ein Luftleitelement angeordnet ist, das in einer Betriebsstellung den Windabweiser überragt und in einer Ruhestellung unterhalb des Schiebedaches angeordnet ist. Das Luftleitelement ist entweder über eine ortsfeste Schwenkachse oder eine elastische Achse am Windabweiser verschwenkbar gehalten, wozu das Luftleitelement mit dem Windabweiser mittels einer Klebung oder durch Anvulkanisieren verbunden wird. Aus der DE 109 53 358 A1 ist ein Windabweiserprofil mit einer Störlippe bekannt, die aus Gummi besteht und sich quer über das Fahrzeug erstreckt. Diese Störlippe ist in einem Schlitz gehalten. Das Windabweiserprofil kann ins Fahrzeuginnere geschwenkt werden, wenn das Schiebedach geschlossen ist. Ein Abbiegen der Störlippe erfolgt nur durch Windeinflüsse.

Die Aufgabe der Erfindung besteht darin, eine Luftleiteinrichtung an einem Windabweiser zu schaffen, die in einfacher Weise zu montieren und zudem in eine Betriebs- und Ruhestellung elastisch verstellbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß das Luftleitelement in einem Querschlitz des Windabweisers einfach zu montieren und auszuwechseln ist. Hierzu weist das Luftleitelement einen Haltabschnitt mit wenigstens einem anschließenden elastischen Flügel auf. Der Halteabschnitt ist ein einem Querschlitz des Windabweisers eingeklemmt gehalten und der Flügel erstreckt sich in der Betriebsstellung aus dem Schlitz heraus und ist oberhalb des Windabweisers angeordnet. In einer Ruhestellung ist der Flügel elastisch abgebogen und unterhalb des Schiebedaches angeordnet.

Das Luftleitelement wird von unten her in den Querschlitz des Windabweisers eingeschoben und verklemmt sich aufgrund seiner etwas größeren Dicke in Bezug auf die hierzu geringere Breite im Querschlitz. Das Luftleitelement ist hierdurch in seiner Ruhestellung und in seinen möglichen Betriebsstellungen fest und unverschieblich gehalten.

Der Querschlitz ist in einem bestehenden Innensteg des Windabweisers vorgesehen und durchdringt diesen auf einem Abschnitt. Der Windabweiser besteht hierzu aus einem profilierten Element, das in einem querverlaufenden Innensteg den durchgehenden Querschlitz gleicher Breite aufweist, der in einer Fahrzeuglängsmittenebene angeordnet ist.

Damit der Flügel des Luftleitelements nicht in den Querschlitz hineindrückbar ist und wegtauchen kann, weist der Halteabschnitt des Flügels eine größere Dicke auf, als der anschließende Flügel und ist zu diesem über einen umlaufenden Rand abgesetzt. Dieser umlaufende Rand des Flügels ist als Abdicht- und Halteelement zum Querschlitz ausgebildet. Der Rand schließt den Querschlitz beispielsweise gegen Wasser und Luft von oben her dicht ab, so daß kein Eintritt dieser Medium in den Innenraum des Fahrzeugs erfolgen kann.

Der umlaufende Rand trennt den Halteabschnitt vom eigentlichen Flügel des Luftleitelements, so daß sich benachbart des Randes eine elastische Biegekante ausbilden kann, derart, daß zwischen dem umlaufenden Rand und dem sich anschließenden Flügel eine elastische Biegekante bildet, derart, daß der Flügel durch Beaufschlagung des Schiebedaches eine in Fahrtrichtung um die Biegekante abgebogene Ruhestellung und in Betriebsstellung eine vertikale Position und bei hohen Windlasten eine entgegen der Fahrtrichtung um die Biegekante abgebogene Lastposition aufweist.

Damit das Luftleitelement immer lagegenau positionierbar ist und nicht unkontrolliert in den Querschlitz hineingeschoben werden kann, weist der Halteabschnitt endseitig eine Begrenzungswulst auf, der beispielsweise auch an einer am Halteabschnitt angeformten Zunge vorgesehen sein kann. Dieser Begrenzungswulst weist eine größere Breite als der Querschlitz auf.

Zur Sicherstellung einer gleichbleibenden Position des Luftleitelements im Querschlitz des Windabweisers stützt sich der Wulst des Halteelements in einer Ruhestellung an einer Erhebung des Dachrahmens ab, so daß das Luftleitelement in dieser Position zwangsweise lagegenau positionierbar ist.

Durch das aufgestellte Luftleitelement in der Betriebsstellung wird ein sogenanntes Wummern im Fahrzeuginnenraum vermieden, welches durch Luftschwingungen erzeugt wird, die durch einen über das Fahrzeugdach geleitete Luftströmung erzeugt wird.

Ein Ausführungsbeispiel der Erfindung ist in den Zeichnungen dargestellt und wird im folgenden näher beschrieben.

Es zeigen
- Fig. 1: eine schaubildliche Darstellung auf ein Fahrzeug mit Schiebedach und einem Windabweiser und Luftleitelement,

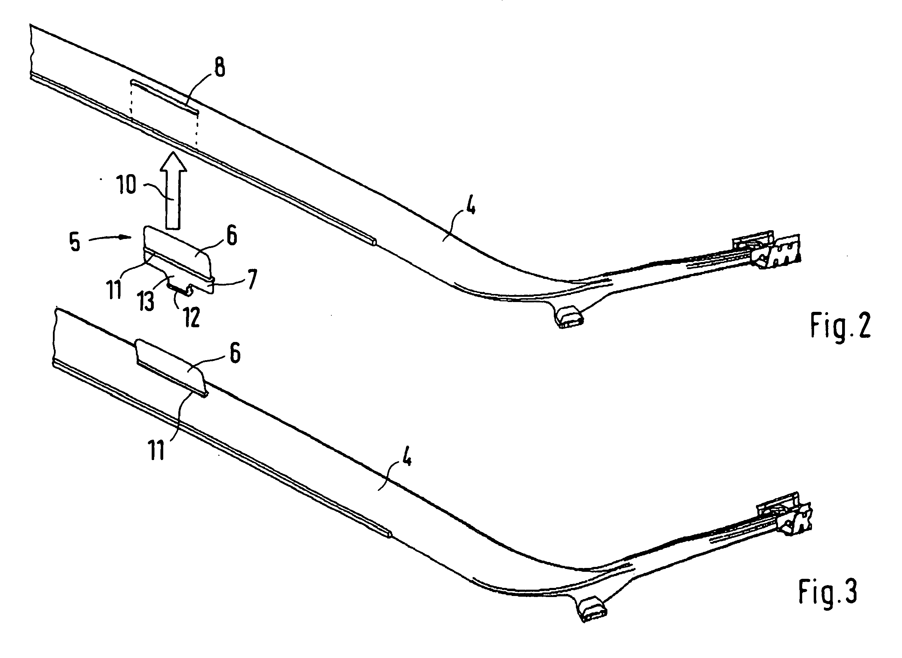

- Fig. 2: den Windabweiser mit Querschlitz und montiertem Luftleitelement,
- Fig. 3: den Windabweiser mit eingebautem Luftleitelement,
- Fig. 4: einen Vertikalschnitt durch das Schiebedach mit Windabweiser und Luftleitelement sowie Dachrahmen in einer Ruhestellung,
- Fig. 5: einen Vertikalschnitt durch den Windabweiser und Luftleitelement in eine Betriebsstellung und
- Fig. 6: einen Vertikalschnitt durch den Windabweiser mit Luftleitelement in einer möglichen weiteren Betriebsstellung.

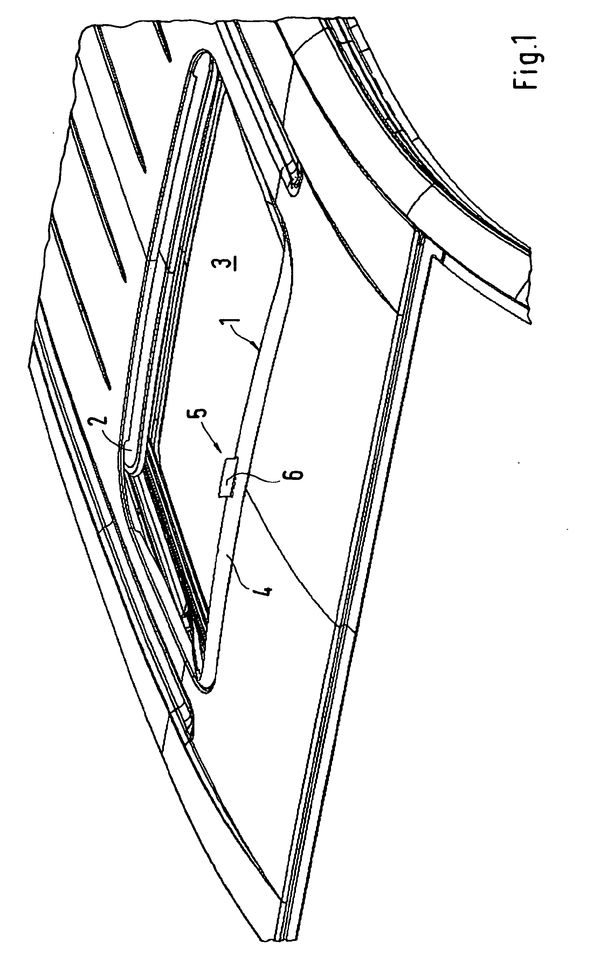

Wie in Fig. 1 näher zu erkennen ist, ist am vorderen Ausschnitt 1, einer über ein Schiebedach 2 geöffneten Dachöffnung 3 in einem aufgestellten Windabweiser 4 ein Luftleitelement 5 angeordnet, von dem ein aufrecht stehender Flügel 6 sichtbar ist.

Dieser ist in der Fahrzeuglängsmittenebene angeordnet, kann aber auch mehrfach im Windabweiser 4 vorgesehen sein.

Der Windabweiser 4 ist am Fahrzeugdach angelenkt und stellt sich bei geöffnetem Schiebedach 2 auf und bei geschlossenem Schiebedach 2 wird dieser nach unten abgeschwenkt.

Das Luftleitelement 5 umfaßt einen Halteabschnitt 7 und einen daran anschließenden elastischen Flügel 6. Zur Festlegung im Windabweiser 4 weist dieser einen quergerichteten Schlitz 8 auf, in dem der Halteabschnitt 7 aufgenommen wird. Der Schlitz 8 ist derart bemessen, daß der Halteabschnitt 7 klemmend aufgenommen wird, das heißt, dieser ist geringfügig dicker ausgeführt als die Breite des Querschlitzes 8.

Der Schlitz 8 ist in einem Innensteg 9 des aus einem Profil bestehenden Windabweisers 4 angeordnet, derart, daß das Luftleitelement 5 von unten her in Pfeilrichtung 10 eingesteckt wird. Damit ein Zurückrutschen des Luftleitelements 5 im Schlitz 8 nicht erfolgen kann, weist das Luftleitelement 5 zwischen dem Flügel 6 und dem Halteabschnitt 7 einen umlaufenden, vorstehenden Rand 11 auf, der die Öffnung des Schlitzes 8 von oben her abdeckt.

Am Halteabschnitt 7 ist endseitig ein Begrenzungswulst 12 vorgesehen, der an einer vom Halteabschnitt 7 nach unten vorragenden Zunge 13 angeordnet ist. Dieser Wulst 12 begrenzt die eingeschobene Lage des Luftleitelements 5 im Schlitz 8 und gleichzeitig wird das Luftleitelement 5 bei geschlossenem Schiebedach 2 in Lage gehalten, indem sich der Begrenzungswulst 12 an einer Erhebung 14 des Dachrahmens 15 abstützt.

Das Luftleitelement 5 ist über den umlaufenden Rand 11 in den Flügel 6 und in den Halteabschnitt 7 unterteilt, wobei der Flügel 6 dickenmäßig dünner ausgeführt ist als der Halteabschnitt 7. Der Flügel 6 besteht vorzugsweise aus einem elastischen Material und kann sich benachbart des umlaufenden Randes 11 umbiegen.

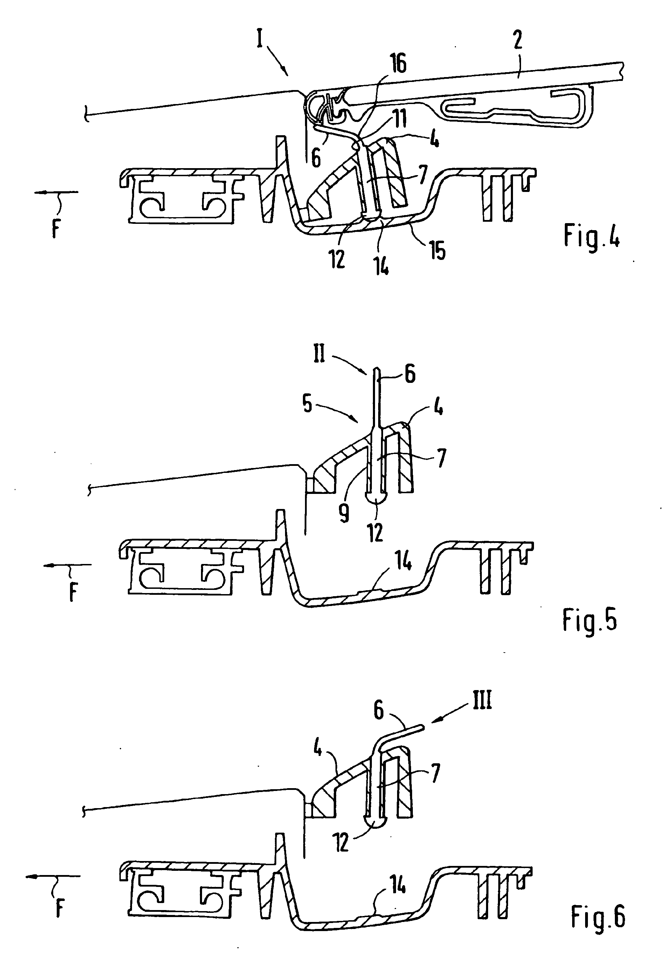

In den Fig. 4 bis 6 sind die möglichen Wirkungsweisen des Luftleitelements 5 näher dargestellt. So zeigt Fig. 4 das Luftleitelement 5 bei geschlossenem Schiebedach 2 in einer Ruhestellung I. In dieser Stellung I ist der Windabweiser 4 in den Dachrahmen 15 abgesenkt und das Luftleitelement 5 wird durch Beeinflussung des Schiebedachs 2 nach vorn in Fahrtrichtung F um eine Biegekante 16 benachbart des Randes 11 umgebogen.

In Fig. 5 ist das Luftleitelement 5 in seiner Betriebsstellung II gezeigt, bei der der Flügel 6 über den ausgeschwenkten Windabweiser 4 vertikal heraussteht.

In Fig. 6 ist das Luftleitelement 5 in einer weiteren möglichen Betriebsstellung III gezeigt, bei der der Flügel 6 durch eine Luftströmung entgegen der Fahrtrichtung F nach hinten abgebogen ist. Wenn die Luftströmung nachläßt, richtet sich der Flügel 6 entprechend auf bzw. nimmt eine Position unter einem anderen Winkel ein.

## Patentansprüche

1. Luftleitvorrichtung an einem Windabweiser (4) für ein mit einem Schiebedach (2) versehenes Kraftfahrzeug, welcher ein Luftleitelement (5) umfasst, das in einer Betriebsstellung (II) den Windabweiser (4) nach oben hin aufgerichtet überragt und das Luftleitelement (5) einen Halteabschnitt (7) mit wenigstens einem anschließenden elastischen Flügel (6) umfasst, der elastisch abbiegbar ist und der Halteabschnitt (7) in einem Schlitz (8) des Windabweisers (4) eingeklemmt gehalten ist und der Flügel (6) sich in der Betriebsstellung (II) aus dem Schlitz (8) heraus oberhalb des Windabweisers (4) in einer etwa vertikalen Ebene erstreckt, **dadurch gekennzeichnet, dass** der Windabweiser (4) in einem querverlaufenden Innensteg (9) einen durchgehenden Querschlitz (8) gleicher Breite aufweist, der in einer Fahrzeuglängsmittenebene angeordnet ist und in welchem der Halteabschnitt (7) angeordnet ist, wobei der Halteabschnitt (7) des Flügels (6) eine größere Dicke aufweist, als der anschließende Flügel (6) und zu diesem über einen umlaufenden Rand (11) abgesetzt ist und zwischen dem umlaufenden Rand (11) und dem sich anschließenden Flügel (6) eine elastische Biegekante (16) gebildet wird, derart, dass der Flügel (6) durch Beaufschlagung des Schiebedaches (2) eine in Fahrtrichtung (F) um die Biegekante (16) abgebogene Ruhestellung (I) und in Betriebsstellung (II) eine vertikale Position aufweist.

2. Luftleiteinrichtung nach Anspruch 1, **dadurch gekennzeichnet, daß** der umlaufende Rand (11) des Flügels (6) als Abdicht und Halteelement zum Querschlitz (8) ausgebildet ist.

3. Luftleiteinrichtung nach Anspruch 1 oder 2, **dadurch gekennzeichnet, daß** der Halteabschnitt (7) einen endseitigen Begrenzungswulst (12) aufweist, der sich in einem mittleren Bereich des Halteabschnitts (7) befindet, welcher von diesem als Zunge (13) vorgezogen ist.

4. Luftleiteinrichtung nach den Ansprüchen 1, 2 oder 3, **dadurch gekennzeichnet, daß** der Begrenzungswulst (12) in der Ruhestellung (I) an einer Erhebung (14) eines Dachrahmens (15) des Fahrzeugs endseitig abgestützt ist.

## Claims

1. An air guiding device on a draught deflector (4) for a motor vehicle provided with a sliding roof (2), which draught deflector (4) comprises an air guiding member (5) which, in an operating position (II), is directed upwards and projects beyond the draught deflector (4), and the air guiding member (5) comprises a holding portion (7) with at least one adjoining resilient fin (6) which is resiliently bendable, and the holding portion (7) is held clamped in a slot (8) in the draught deflector (4), and the fin (6) extends out of the slot (8) in an approximately vertical plane above the draught deflector (4) in the operating position (II), **characterised in that** the draught deflector (4) has a continuous transverse slot (8) of the same width in a transversely extending inner crosspiece (9), which transverse slot (8) is arranged in a longitudinal central plane of the vehicle and in which the holding portion (7) is arranged, wherein the holding portion (7) of the fin (6) has a greater thickness than the adjoining fin (6) and is offset in relation thereto via a circumferential edge (11), and a resilient bending edge (16) is formed between the circumferential edge (11) and the adjoining fin (6) in such a way that the fin (6), by the action of the sliding roof (2), is bent around the bending edge (16) in the direction of travel (F) in a rest position (I) and is vertically arranged in the operating position (II).

2. An air guiding device according to claim 1, **characterised in that** the circumferential edge (11) of the fin (6) is formed as a sealing and holding member in relation to the transverse slot (8).

3. An air guiding device according to claim 1 or 2, **characterised in that** the holding portion (7) has an end boundary bead (12) located in a middle region of the holding portion (7), the middle region projecting from the latter in the form of a tongue (13).

4. An air guiding device according to claim 1, 2 or 3, **characterised in that**, in the rest position (I), the boundary bead (12) is supported at its end against an elevation (14) of a roof frame (15) of the vehicle.

## Revendications

1. Dispositif de guidage d'air sur un déflecteur (4) pour un véhicule automobile équipé d'un toit coulissant (2), lequel comporte un élément de guidage d'air (5) qui, dans une position de service (II), s'avance en saillie au-delà du déflecteur (4) redressé vers le haut, et l'élément de guidage d'air (5) comporte une partie de fixation (7) avec au moins une ailette (6) élastique attenante, qui peut se plier élastiquement, et la partie de fixation (7) est maintenue serrée dans une fente (8) du déflecteur (4), et dans la position de service (II), l'ailette (6) s'avance hors de la fente (8) au-dessus du déflecteur (4) dans un plan sensiblement vertical, **caractérisé en ce que** le déflecteur (4) comporte dans une nervure intérieure (9) transversale, une fente transversale (8) traversante de même largeur, qui est réalisée dans un plan médian longitudinal du véhicule et dans laquelle est agencée la partie de fixation (7), la partie de fixation (7) de l'ailette (6) ayant une épaisseur supérieure à celle de l'ailette (6) attenante et étant séparée de celle-ci par l'intermédiaire d'un bord (11) périphérique, et une arête de flexion (16) élastique étant formée entre le bord (11) périphérique et l'ailette (6) attenante, de telle sorte que l'ailette (6), sous l'effet de la sollicitation du toit coulissant (2), comporte une position de repos (I), courbée autour de l'arête de flexion (16) dans le sens de déplacement (F) du véhicule, et une position de service (II) redressée verticalement.

2. Dispositif de guidage d'air selon la revendication 1, **caractérisé en ce que** le bord (11) périphérique de l'ailette (6) est réalisé sous forme d'élément d'étanchéité et de retenue par rapport à la fente transversale (8).

3. Dispositif de guidage d'air selon la revendication 1 ou 2, **caractérisé en ce que** la partie de fixation (7) comporte du côté extrémité un bourrelet de délimitation (12), qui se situe dans une zone centrale de la partie de fixation (7), qui s'avance en saillie en forme de patte (13) à partir de cette dernière.

4. Dispositif de guidage d'air selon la revendication 1, 2 ou 3, **caractérisé en ce que**, dans la position de repos (I), le bourrelet de délimitation (12) prend appui contre un rehaussement (14) d'un cadre de toit (15) du véhicule.
